# EUROPÄISCHE PATENTSCHRIFT

(11) **EP 2 808 463 B1**
(45) Veröffentlichungstag und Bekanntmachung des Hinweises auf die Patenterteilung: **20.05.2015**
(21) Anmeldenummer: 14170303.3
(22) Anmeldetag: 28.05.2014
(51) Int. Cl.: E04F 13/08, E04F 15/04

(54) **Holzwerkstoffplatte mit Lederpartikeln oder bedruckter Schicht aus Lederpartikeln und Verfahren zu deren Herstellung**
Composite wood panel with leather particles or printed layer of leather particles and process for their preparation
Plaque en bois dotée de particules de cuir ou d'une couche imprimée en particules de cuir et procédé de fabrication de celle-ci

(30) Priorität: 30.05.2013 EP 13169863
(43) Veröffentlichungstag der Anmeldung: 03.12.2014
(73) Patentinhaber: Flooring Technologies Ltd., Pieta PTA 9044 (MT)
(72) Erfinder: KALWA, Norbert, 32805 Horn-Bad Meinberg (DE)
(74) Vertreter: Morawski, Birgit

(56) Entgegenhaltungen:
- EP-A1- 1 806 223
- EP-A1- 1 992 499
- EP-A1- 2 452 829
- WO-A2-2007/047848
- BE-A6- 1 015 862
- CN-U- 201 437 312
- US-A1- 2004 151 936

## Beschreibung

Die vorliegende Erfindung betrifft eine Holzwerkstoffplatte nach dem Oberbegriff des Anspruchs 1, deren Verwendung nach Anspruch 11 und Verfahren zu deren Herstellung nach Anspruch 12.

### Beschreibung

Holzwerkstoffplatten sind unter anderem aus der Verwendung als Fußbodenpaneele, zum Beispiel in Form von Laminatböden, als Dämmstoffplatten für den Innen- und Außenbereich oder auch als Wandpaneele bekannt. Derartige Werkstoffplatten werden üblicherweise aus Holzfasern, Holzspänen oder Strands hergestellt. Im Falle von Laminatböden werden aus Holzfasern hergestellte HDF-Platten mit vielfältigen Dekoren und darauf aufgetragenen Schutzschichten verwendet.

Zur Erhöhung der Trittschalldämmung wurden in der Vergangenheit verschiedene Maßnahmen getroffen. So ist es zum Beispiel üblich, auf die Rückseite einer mit einem Dekor versehenen Trägerplatte ein Dämmmaterial zur Trittschalldämmung aufzubringen.

Ein alternativer Ansatz zur Verbesserung der Trittschalldämmung kann zum Beispiel das Auftragen einer Korkschicht auf die Oberfläche einer HDF-Trägerplatte sein. In der WO 2012/113652 A2 wird ein solches Fußbodenpaneel mit bedruckter Korkschicht beschrieben. Der Vorteil von Korkfußböden besteht in deren warmer und weicher Haptik, die durch eine geringe Wärmeleitfähigkeit und hohe Elastizität des Korks bedingt ist. Zur Erhöhung der Qualität und Ästhetik von Korkfußböden bzw. Korkschichten wird hier vorgeschlagen, eine Dekorschicht auf die Korkoberfläche aufzutragen. Als Nachteil erweist sich allerdings die geringe Verschleißfestigkeit von Kork, welche auch nur bedingt durch geeignete Schutzschichten verbessert werden kann. Besonders nachteilig zeigt sich, das eine Korkoberfläche vor dem Dekorieren aufwändig von Löchern befreit werden muss, beispielsweise durch einen Arbeitsgang Spachteln. Dabei wird auf die Oberfläche z. B. mit Hilfe einer Stahlwalze ein Lack auf die Oberfläche aufgebracht und in die Vertiefungen/Löcher gedrückt. Der Lack wird anschließend z. B. durch UV-Strahlung gehärtet. Üblicherweise wird die Oberfläche danach nochmals geschliffen. Trotzdem telegrafieren Fehlstellen immer wieder auch durch eine fertige Dekorierung hindurch. Solche Mängel sind erst ermittelbar, wenn bereits ein hoher Anarbeitungsgrad vorliegt. Dann sind Nachbesserungen mit großem Aufwand verbunden.

Eine weitere Alternative zur Erhöhung der Trittschalldämmung von Holzfaserplatten ist zum Beispiel das Aufbringen einer Kaschierung oder Folie aus Polyvinylchlorid (PVC). Aufgrund der elastischen und weichen Eigenschaften von PVC, insbesondere im Vergleich zu den sonst üblichen Melaminharzoberflächen von Laminatfußböden, weisen Holzwerkstoffplatten mit PVC eine verbesserte Trittschall-/Raumschalldämmung auf. Aus ökologischen Aspekten ist allerdings die Verwendung von PVC als Fußbodenbelag nicht wünschenswert, da PVC nur schwer abbaubar und recyclebar ist. Zudem geben PVC-Fußböden über die Zeit Weichmacher aus der Oberfläche in die Umgebung ab. Besonders bei einer Anwendung in geschlossenen Räumen kann dies als gesundheitlich bedenklich angesehen werden.

Eine weitere Alternative zur Verbesserung der Trittschalldämmung besteht in der Verwendung von Lederfaserstoffen. So werden Fußbodenplatten angeboten, bei denen ein Lederfaserstoff mit einer HDF-Trägerplatte verbunden ist. Eine derartige Holzwerkstoffplate ist aus der US 2004/0151936A1 bekannt.

Leder ist ein natürlicher Rohstoff, der in großen Mengen für die verschiedensten Anwendungen genutzt wird. Bei der Herstellung und Verarbeitung von Leder fallen in erheblichen Mengen Reste an, die zum Teil verarbeitet werden und zum Teil entsorgt werden müssen, da die derzeitigen Anwendungsgebiete mengenmäßig begrenzt sind und die vorhandenen Mengen nicht vollständig aufnehmen können. Eine besonders hochwertige Basis stellt dabei der Lederfaserwerkstoff dar, der als plattenförmiger Werkstoff in verschiedenen Stärken lieferbar ist, beispielsweise 1 bis 5 mm.

Als Lederwerkstoff oder auch Lederfaserstoff wird hierbei ein Werkstoff aus Falzspänen z.B. Chromfalzspänen und zerkleinerten, pflanzlich gegerbten Lederresten der lederverarbeitenden Industrie, Bindemittel z.B. Naturlatex und natürlichen Fetten definiert. Der Anteil an Leder in einem Lederfaserstoff beträgt mindestens 50%. Die verarbeiteten Lederreste können unter anderem vom Rind oder auch anderen Tieren, wie zum Beispiel Pferden, stammen.

Lederfaserstoffe werden derzeit für unterschiedlichste Anwendungen wie Schuhe, Verpackungsmaterial, Möbel und Bodenbeläge genutzt. Auch ist die Verwendung von Lederfaserstoffen für Bucheinbandmaterial bekannt. Der Haupteinsatzbereich liegt allerdings auf dem Gebiet der Schuhproduktion (Absätze).

Für Bodenbeläge werden derzeit eher geringere Mengen an Lederfaserstoffen eingesetzt, da die im Markt vorhandenen Produkte hinsichtlich ihrer Farbgestaltung als auch hinsichtlich ihrer Verschleißfestigkeit den Anforderungen an die Einsetzbarkeit moderner Bodenbeläge nicht gerecht werden. Der Mangel an Verschleißfestigkeit und Farbgestaltung kann auch nicht durch das angenehme Gehgefühl und die Fußwärme beim Begehen kompensiert werden. Eine gewisse Minderung der beschriebenen Nachteile wird durch eine einfache Strukturierbarkeit der Oberfläche erreicht. Insgesamt reduziert sich die Verwendung dieser Produkte auf den weniger beanspruchten privaten Bereich, insbesondere auf ein kleines hochpreisiges Segment.

Weiterhin kann das Leder, wie bereits oben angedeutet, auch als Dämmungsschicht zur Reduzierung von Geh- und Raumschall von Fußbodenplatten genutzt werden. Auch dieser Aspekt wird derzeit bei der Verwendung von Leder in Verbindung mit Fußbodenpaneelen nur unvollständig berücksichtigt.

Der vorliegenden Erfindung liegt daher die technische Aufgabe zugrunde, eine Holzwerkstoffplatte bereitzustellen, die über eine im Vergleich zu den konventionellen Werkstoffplatten, die zum Beispiel als Fußbodenpaneele eingesetzt werden, eine verbesserte Schalldämmung und gleichzeitig über eine warme Haptik, dekorative Vielfalt und hohe Verschleißfestigkeit verfügen.

Diese Aufgabe wird erfindungsgemäß durch eine Holzwerkstoffplatte mit den Merkmalen des Anspruchs 1 gelöst.

Demnach wird eine Holzwerkstoffplatte mit mindestens einer Trägerplatte, mindestens einer auf einer Seite der Trägerplatte angeordneten Schicht umfassend Lederpartikel, mindestens einer auf der Schicht aus Lederpartikeln aufgedruckten Dekorschicht und mindestens einer auf der aufgedruckten Dekorschicht angeordneten Verschleißschicht zur Verfügung gestellt.

Die mindestens eine Trägerplatte kann aus Holzpartikeln oder einem Gemisch aus Holzpartikeln und Lederpartikeln bestehen.

Erfindungsgemäß sind den Holzpartikel oder dem Gemisch aus Holzpartikeln und Lederpartikeln zur Herstellung einer Trägerplatte mindestens ein Bindemittel und gegebenenfalls weitere Additive, insbesondere Flammschutzmittel zugefügt. Unter Holzpartikel sind vorliegend lignocellulosehaltige Zerkleinerungsprodukte wie z.B. Holzfasern, Holzspäne oder auch Holzstrands zu verstehen. Im Falle der Verwendung von Holzfasern kommen insbesondere trockene Holzfasern mit einer Länge von 1,0 mm bis 20 mm, bevorzugt 1,5 mm bis 10 mm und einer Dicke von 0,05 mm bis 1 mm zum Einsatz.

Die in der vorliegenden Holzwerkstoffplatte einsetzbaren Lederpartikel sind bevorzugterweise Lederfasern, die aus zerkleinerten, pflanzlich gegerbten Lederresten der lederverarbeitenden Industrie gewonnen werden. Derartige Lederfasern weisen typischerweise eine Länge von bis zu 20 mm, bevorzugt 5 bis 15 mm auf und eine Dicke von bis zu 1 mm, bevorzugt 0,5 bis 1 mm auf.

Das zur Herstellung der Trägerplatte der vorliegenden Holzwerkstoffplatte bevorzugt verwendete Gemisch aus Holzpartikeln und Lederpartikeln kann 60 bis 90 Gew% Holzpartikel, bevorzugt 60 bis 70 Gew% Holzpartikel und 10 bis 40 Gew%, bevorzugt 10 bis 30 Gew% an Lederpartikeln enthält.

Wie bereits erwähnt, wird bei der Herstellung der Trägerplatte den Holzpartikeln oder dem Gemisch aus Holzpartikeln und Lederpartikeln bevorzugterweise mindestens ein Bindemittel zugesetzt, um eine stoffschlüssige Verbindung der Partikel miteinander zu gewährleisten.

Als geeignete Bindemittel für die Holzpartikel und das Holzpartikel-Lederpartikel-Gemisch können formaldehydhaltige Harze, wie Melamin-Formaldehyd-Harz, Harnstoff-Formaldehyd-Harz oder Phenol-Formaldehyd-Harz oder Isocyanate zum Einsatz kommen.

Für den Fall, dass ein Isocyanat als Bindmittel verwendet wird, ist dieses ausgewählt aus einer Gruppe enthaltend aliphatische und aromatische Isocyanate. Als aliphatische Isocyanate können zum Beispiel Hexamethylendiisocyanat (HDI), Isophorondüsocyanat (IPDI) und/oder 1,4-Cyclohexyldiisocyanat (CHDI) verwendet werden. Typische geeignete aromatische Isocyanate sind zum Beispiel Diphenylmethandiisocyanat (MDI) oder Toluylendiisocyanat (TDI) oder auch polymeres Diphenylmethandiisocyanat (PMDI), wobei Letzteres besonders bevorzugt ist. Das Isocyanat unterliegt bei seiner Verwendung als Bindemittel zwei chemischen Reaktionen. Zum einen bildet es in Gegenwart von Wasser Polyharnstoff aus. Parallel dazu erfolgt die Anbindung an die Holzpartikel und Lederpartikel durch die Reaktion der Isocyanate mit freien Hydroxy- oder Aminogruppen an der Oberfläche der Holzpartikel und/oder Lederpartikel unter Ausbildung einer Urethan- oder Harnstoffbindung.

Das optionale Flammschutzmittel kann dem Holzpartikel-Lederpartikel-Gemisch in einer Menge zwischen 5 und 20 Gew%, bevorzugt zwischen 8 und 17 Gew%, insbesondere bevorzugt 15 Gew% zugegeben werden. Typische Flammschutzmittel sind dabei ausgewählt aus der Gruppe umfassend Phosphate, Borate, insbesondere Ammoniumpolyphosphat, Tris(tri-bromneopentyl)phosphat, Zinkborat oder Borsäurekomplexe von mehrwertigen Alkoholen.

Die Dicke der Trägerplatte aus Holzpartikel alleine oder dem Holzpartikel-Lederpartikel-Gemisch kann je nach Bedarf zwischen 3 und 20 mm, bevorzugt zwischen 5 und 15 mm, insbesondere 5 mm betragen.

Wie oben angeführt, ist in der vorliegenden Holzwerkstoffplatte auf mindestens einer Seite (d.h. auf der Oberseite und/oder Unterseite) der mindestens einen Trägerplatte mindestens eine weitere Schicht aus Lederpartikeln angeordnet. Demnach können die Lederpartikel als eine zusätzliche Schicht auf die Trägerplatte hergestellt aus Holzpartikel oder einem Holzpartikel-Lederpartikel-Gemisch aufgetragen, insbesondere aufgestreut und anschließend aufgepresst werden. Die Anordnung einer zusätzlichen Schicht aus Lederpartikeln sowohl auf der Oberseite als auch der Unterseite der Holzwerkstoffplatte ermöglicht eine weitergehende Reduzierung des Raum- und Gehschalls für den Fall, dass die Holzwerkstoffplatte z.B. als Fußbodenpaneel eingesetzt wird.

Wie oben erwähnt weist die vorliegende Holzwerkstoffplatte auch mindestens eine Verschleißschicht auf, die auf einer (noch später im Detail beschriebenen Dekorschicht) angeordnet ist. Die Verschleißschicht weist eine Schicht umfassend natürliche oder synthetische Fasern, mindestens ein Bindemittel, abriebfeste Partikel, Pigmente und mindestens ein Additv auf.

Diese mindestens eine Verschleißschicht kann verschieden aufgebaut sein. So kann die Verschleißschicht in folgenden Varianten vorliegen:
a) als mindestens ein Overlaypapier,
b) als mindestens eine UV-härtbare und/oder Elektronenstrahlhärtbare (ESH)-Schutzschicht, und/oder
c) als mindestens eine wärmehärtbare Schutzschicht.

Die einzelnen möglichen Varianten der Verschleißschicht werden im Folgenden detaillierter erläutert.

Die Verschleißschicht umfassend Fasern, Bindemittel, Partikel, Pigmente und/oder Additiv kann entweder unmittelbar auf der Oberseite der Trägerplatte aufgetragen werden, oder aber auch auf der zusätzlichen Schicht aus Lederpartikeln, die zuvor auf der Trägerplatte aufgestreut wurde, angeordnet sein. Im ersteren Fall wäre der Schichtaufbau Trägerplatte aus Holzpartikel-Lederpartikel-Gemisch und Verschleißschicht; im letzteren Fall wäre der Schichtaufbau Trägerplatte aus Holzpartikel-Lederpartikel-Gemisch, Schicht aus Lederpartikel und Verschleißschicht.

Die Verschleißschicht aus Fasern, Bindemitteln, Partikeln, Pigmenten und/oder Additiv wird in Form eines Pulvers auf die Oberfläche der Trägerplatte aufgetragen. Das Pulver setzt sich dabei aus 30 bis 65 Gew%, bevorzugt 40 bis 60 Gew% Fasern, 20 bis 45 Gew%, bevorzugt 30 bis 40 Gew% Bindemittel, 5 bis 25 Gew%, bevorzugt 10 bis 20 Gew% abriebfesten Partikeln und 0 bis 8 Gew%, bevorzugt 0,5 bis 6 Gew% Additiv zusammen.

Die Dicke der Verschleißschicht kann zwischen 0,05 und 10 mm, insbesondere zwischen 0,2 und 5 mm betragen. Dabei kann die Oberflächenschicht mindestens in eine obere und eine untere Lage aufgeteilt sein, wobei die obere Lage eine Dicke zwischen 0,05 und 7 mm aufweisen kann, wohingegen die untere Lage eine bevorzugte Dicke zwischen 0,5 und 3 mm aufweist. Insbesondere ist eine Dicke einer der beiden Lagen von 0,7 mm bevorzugt.

Die obere Lage kann bevorzugt einen Anteil zwischen 0 bis 1 Gew% des Additivs enthalten, während der Anteil des Additivs in der unteren Lage vorteilhafterweise zwischen 0,5 bis 5 Gew% beträgt. Es ist auch vorstellbar, dass die untere Lage keine abriebfesten Partikel aufweist. Diese sind bevorzugt zur Erhöhung der Verschleißfestigkeit der Oberflächenschicht in die obere Lage eingetragen.

Das mindestens eine Additiv ist vorteilhafterweise ausgewählt aus der Gruppe enthaltend leitfähige Substanzen. Darüber hinaus ist die Zugabe von weiteren Additiven anstatt oder zusätzlich zu den leitfähigen Substanzen möglich. Diese weiteren Additive können ausgewählt sein aus der Gruppe enthaltend Flammschutzmittel, luminiszierende Stoffe und Metalle.

Dabei können die leitfähigen Substanzen ausgewählt sein aus der Gruppe enthaltend Russ, Kohlefasern, Metallpulver und Nanopartikel, insbesondere Kohlenstoffnanoröhren. Es können auch Kombinationen dieser Substanzen zum Einsatz kommen.

Es ist insbesondere von Vorteil, wenn bei einer Werkstoffplatte mit einer Oberflächenschicht umfassend mindestens zwei Lagen die obere Lage keine leitfähigen Substanzen enthält, sondern diese lediglich in der unteren Lage enthalten sind. Es muss hierbei lediglich gewährleistet sein, dass die untere Lage eine erhöhte Menge an leitfähigen Substanzen enthält, um eine ausreichende Ladungsableitung zu bewirken.

In einer weiteren Ausführungsform ist das Additiv ausgewählt aus der Gruppe der Flammschutzmittel enthaltend Phosphate, Borate, insbesondere Ammoniumpolyphosphat, Tris(tri-bromneopentyl)phosphat, Zinkborat oder Borsäurekomplexe von mehrwertigen Alkoholen.

Die Verwendung von Flammenschutzmittel führt zu einer Verringerung der Entflammbarkeit und ist daher insbesondere bei Laminatböden von Bedeutung, die in geschlossenen Räumen mit besonderen Anforderungen an den Brandschutz oder in Fluchtwegen eingesetzt werden.

Als luminiszierende Stoffe werden bevorzugt fluoreszierende und/oder phosphoreszierende Stoffe auf anorganischer oder organischer Basis, insbesondere Zinksulfid und Erdalkalialuminate.

Die luminiszierenden Stoffe können in geometrischen Formen durch Schablonen auf die Oberfläche aufgetragen werden. Durch das Einarbeiten dieser Farbstoffe in die Oberfläche von Werkstoffplatten, die als Fußboden- oder Wandpaneele zum Beispiel in geschlossenen Räumen eingesetzt werden können, ist somit bei Ausfall der Beleuchtung ein Hinweis über Fluchtwege und Fluchtrichtung möglich.

Die verwendeten natürlichen oder synthetischen Fasern sind bevorzugt ausgewählt aus der Gruppe enthaltend Holzfasern, Zellulosefasern, partiell gebleichte Zellulosefasern, Wollfasern, Hanffasern und organische oder anorganische Polymerfasern. Hier ist auch vorstellbar, anstatt der genannten Fasern oder zusätzlich Lederpartikel bzw. Lederfasern, die z.B. auch gefärbt sein können, zu verwenden.

Als Bindemittel kommt vorteilhafterweise ein Bindemittel ausgewählt aus der Gruppe enthaltend Melamin-, Acrylat- und Polyurethanharze zum Einsatz.

Die abriebfesten Partikel sind bevorzugt ausgewählt aus der Gruppe enthaltend Aluminiumoxide, Korund, Borcarbide, Siliziumdioxide, Siliziumcarbide und Glaskugeln.

Gemäß Variante a) kann die mindestens eine Verschleißschicht auch in Form eine Overlaypapiers vorliegen.

Als Overlay werden dünne Papiere verwendet, welche typischerweise bereits mit einem Melaminharz getränkt wurden Es sind ebenfalls Overlays erhältlich, in denen bereits abriebfeste Partikel, wie zum Beispiel Korundpartikel in das Harz des Overlays eingemischt sind, um die Abriebfestigkeit des Laminats bzw. der Holzwerkstoffplatte zu erhöhen.

Gemäß der weiteren Varianten b) und c) kann die Verschleißschicht auch als UV-härtbare und/oder elektronenstrahlhärtbare (ESH)-Schutzschicht oder als wärmehärtbare Harzschicht (Flüssigoverlay) vorliegen.

Diese Schutzschichten b) und c), die weiter unten noch detaillierter beschrieben werden, werden bevorzugt auf Dekorschichten aufgetragen, die unmittelbar auf die Trägerplatte aufgedruckt werden.

Entsprechend ist - wie oben bereits beschrieben - in der vorliegenden Holzwerkstoffplatte auf der mindestens einen Trägerplatte, mindestens eine aufgedruckte Dekorschicht vorgesehen. Erfindungsgemäß erfolgt somit ein direktes Aufdrucken eines Dekors auf die Schicht aus Lederpartikeln, die auf der Trägerplatte aufgestreut wurde bzw. angeordnet ist. Auch hier wird auf die weiter unten folgenden detaillierten Ausführungen verwiesen.

Ebenfalls kann auch vorgesehen sein, die Verschleißschicht mit mindestens einer 3D-Struktur zu versehen, die entweder aufgedruckt oder mittels Prägewerkzeugen eingeprägt werden kann - wie ebenfalls weiter unten noch im Detail ausgeführt ist.

Wie oben bereits erwähnt kann die vorliegend verwendete Trägerplatte bevorzugt ausschließlich aus Holzpartikel (lignucellulosehaltige Zerkleinerungsprodukte aus Holz), insbesondere Holzfasern für Faserplatten, Holzspänen für Spanplatten oder Holzstrands für OSB-Platten bestehen. Die Trägerplatte umfasst hier demnach keine Lederpartikel. Diese Holzwerkstoffplatte ist dadurch gekennzeichnet, dass auf der Oberseite und/oder Unterseite der mindestens einen Trägerplatte mindestens eine Schicht aus Lederpartikeln, insbesondere Lederfasern, oder Lederfaserstoff angeordnet ist. Auf dieser Lederpartikelschicht ist wiederum mindestens eine Verschleißschicht aufgetragen.

Prinzipiell kann als Substrat eine Trägerplatte aus einem Holzwerkstoff oder aus Kunststoff oder einem Holzwerkstoff-Kunststoff-Gemisch verwendet werden, insbesondere eine Span-, mitteldichte Faser (MDF)-, hochdichte Faser (HDF)- oder Grobspan (OSB)- oder Sperrholzplatte, eine Zementfaserplatte und/oder Gipsfaserplatte.

Die auf der mindestens einen Trägerplatte angeordnete Schicht aus Lederpartikeln bzw. Lederfasern kann in Form einer Partikelmischung, wie zum Beispiel eines Granulates mit einem Bindemittel auf die Trägerplatte aus Holzfasern aufgepresst werden.

Es ist ebenfalls denkbar, dass die Schicht aus Lederpartikeln bzw. Lederfasern als Lederfaserstoff auf die Holzpartikelträgerplatte aufgeklebt wird, das heißt, in Form von separaten Platten oder tafelförmigen Elementen. Wie bereits oben erwähnt, besteht ein Lederfaserstoff aus zerkleinerten, pflanzlich gegerbten Lederresten, einem Bindemittel und natürlichen Fetten. Bevorzugt werden für den vorliegenden Zweck Falzspäne verwendet, die nicht im Vorfeld mit Chrom behandelt wurden. Solch ein Lederfaserstoff wird bevorzugt mit einem flüssigen Klebstoff, z.B. einem PVAc-Klebstoff, in einer Menge zwischen 150 und 250 g/m², insbesondere von 200 g/m² auf die Trägerplatte aufgeklebt.

Die Schichtdicke der auf der Holzfaserträgerplatte angeordneten Schicht aus Lederpartikeln bzw. Lederfasern kann variieren. So kann die Dicke des verwendeten Lederfaserstoffes zwischen 0,4 und 5,5 mm, bevorzugt zwischen 0,5 und 3 mm, insbesondere bevorzugt zwischen 1 und 2 mm liegen.

Es ist generell auch möglich und vorstellbar, den erwähnten Lederfaserstoff unabhängig von einer Holzfaserträgerplatte als solchen einzusetzen und zwar bevorzugt in Form von tafelförmigen Elementen, die ebenfalls mit einer Dekorschicht versehen werden. In solch einem Fall liegt die Dicke der verwendeten Matte bzw. des verwendeten Lederfaserstoffes zwischen 4 und 12 mm, bevorzugt zwischen 5 und 10 mm.

Durch das unmittelbare Aufdrucken einer Dekorschicht auf die Lederpartikelschicht wird die Oberfläche der vorliegenden Holzwerkstoffplatten durch Verwendung von unterschiedlichsten Motiven aufgewertet. Dabei ist von besonderem Vorteil, dass für eine Verwendung im Bereich der Bodenbeläge und Möbel der Lederfaserwerkstoff bzw. die eingesetzten Lederpartikel bereits von Natur aus mit einer leicht bräunlichen Grundfarbe ausgestattet sind. Dies ist vorteilhaft, da viele Dekore im Bereich der Bodenbelagelemente aber auch bei Möbelanwendungen Holzreproduktionen darstellen, die einen mehr oder weniger braunen Grundfarbton besitzen. Damit kann eine farbliche Anpassung des Trägers auf die notwendigen Schritte reduziert werden. Bei Bedarf kann vor dem Aufdrucken der Dekorschicht auf die Oberfläche der Trägerplatte eine Primer-Schicht und/oder eine geeignete Schutzschicht aufgetragen werden.

Als Drucktechniken ist es vorteilhaft, Tiefdruck- und Digitaldruckverfahren anzuwenden. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Hingegen wird beim Digitaldruck das Druckbild direkt von einem Computer in eine Druckmaschine, wie zum Beispiel einen Laserdrucker oder Tintenstrahldrucker, übertragen. Dabei entfällt die Verwendung einer statischen Druckform. In beiden Verfahren ist die Verwendung von wässrigen Farben und Tinten oder farbgebender Mittel auf UV-Basis möglich.

Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

So ist es zum Beispiel denkbar, die in der EP 24 52 829 A1 beschriebene Methode auf die vorliegenden Holzwerkstoffplatten anzuwenden. Hierbei wird zunächst ein erstes Dekor auf eine gegebenenfalls vorbehandelte Oberfläche der Holzwerkstoffplatte im Tiefdruckverfahren aufgedruckt und in einem zweiten, sich unmittelbar anschließenden Schritt ein zweites im Digitaldruck erzeugtes Dekor aufgedruckt.

Es ist ebenfalls möglich und bekannt, zur Erzeugung von Dekordrucken mit gleicher Qualität auf Trägermaterialien einen gemeinsamen elektronischen Datensatz sowohl zur Steuerung eines Digitaldruckers als auch zur Herstellung eines Druckwalzensatzes und deren Verwendung in einem Tiefendruckverfahren zur Dekorbeschichtung zu verwenden.

In einer weiteren Ausführungsform ist auf der mindestens einen, zum Beispiel mittels Tief- oder Digitaldruck aufgedruckten Dekorschicht mindestens eine Schutzschicht angeordnet. Wie noch später weiter unten im Detail erläutert, kann diese Schutzschicht zum Beispiel abriebfeste Partikel oder Fasern enthalten, um die Verschleißfestigkeit der Schutzschicht zu erhöhen.

In einer Ausführungsform der vorliegenden Holzwerkstoffplatte hat es sich als vorteilhaft erwiesen, dass die Oberflächenschicht der mindestens einen Lederpartikelschicht in geeigneter Weise vorbehandelt wird. Dies liegt darin begründet, dass Leder oder Lederfaserstoffe aufgrund der spezifischen Eigenschaften, Quellen (Rinds-, Kalb-, Ziegen- oder Hirschleder) und Herstellungsverfahren über variierende Oberflächenspannungen verfügen, die in einem Bereich zwischen 10 bis 50 mN/m, insbesondere zwischen 20 und 40 mN/m schwanken können.

Die schwankenden Oberflächenspannungen der Lederschicht erweist sich bei einem direkten Bedrucken allerdings als problematisch. Denn um ein qualitativ gutes Druckbild zu erzeugen, sollten die Oberflächenspannungen von zu bedruckender Lederschicht und der verwendeten Drucktinte etwa gleich sein. Da wasserbasierte Drucktinten eine Oberflächenspannung von ca. 25 mN/m (unterer Wert) und strahlenhärtbare Drucktinten eine Oberflächenspannung von ca. 35 mN/m (unterer Wert) aufweisen, ist es daher erforderlich die Oberflächenspannung der zu bedruckenden Lederschicht an diese Werte durch entsprechende Behandlung, bevorzugt an eine Oberflächenspannung von 35 mN/m, anzupassen.

Eine Möglichkeit für eine geeignete Vorbehandlung der Lederschicht stellt die Koronabehandlung oder Plasmabehandlung dar.

Die Koronabehandlung ist ein elektrochemisches Verfahren zur Oberflächenmodifikation von Materialien. Der durch die Korona-Behandlung erzielte Effekt liegt in einer Erhöhung der Oberflächenspannung auf 38 bis 44 mN/m. Da die Oberflächenspannung durch dispersive und polare Wechselwirkungskomponenten zustande kommt, wird durch die Einführung polarer funktioneller Gruppen insbesondere der polare Anteil der Oberflächenspannung erhöht. Die mit einer Lederschicht versehene Trägerplatte wird vorliegend bevorzugt mit einer Prozessgeschwindigkeit von 1 bis 30 m/ min durch eine Korona-Anlage (z.B. der Firmen Ahlbrandt und Arcotec) durchgeführt. Vorteilhaft ist, dass ein zusätzlicher Trocknungsschritt entfällt.

Im Falle einer Plasmabehandlung erfolgt insbesondere bei Verwendung von Kaltplasma eine Erhöhung der Oberflächenspannung durch Ausbildung von polaren Gruppen auf der Oberfläche der Lederschicht. Auch im Falle der Plasmabehandlung ist es möglich, die mit der Lederschicht versehene Trägerplatte mit einer Geschwindigkeit von 1 bis 30 m/min durch eine Plasma-Vorrichtung geführt werden kann.

Eine weitere Möglichkeit zur Reduzierung und Vergleichmäßigung der Oberflächenspannung der auf der Trägerplatte vorgesehenen Lederschicht besteht darin, vor dem Bedrucken mindestens eine Primerschicht, insbesondere eine Isocyanatgruppen haltige Primerschicht, aufzutragen. Eine derartige Primerschicht wird bevorzugt in einer Menge zwischen 5 bis 25 g/m², insbesondere zwischen 10 bis 20 g/m² auf die Lederpartikelschicht aufgetragen. Die Primerschicht ist bevorzugt in einer Grundfarbe des zu druckenden Dekors eingefärbt. Der Auftrag der Primerschicht auf die Lederpartikelschicht erfolgt mittels Sprühen oder Walzen gefolgt von einem Trocknungsschritt. Die mit der Primerschicht versehene Platte wird bevorzugt in einem Umluft-Ofen bei Temperaturen zwischen 80 und 120°C, bevorzugt 100 und 110 °C getrocknet.

Gemäß der Variante b) der vorliegenden Schutzschicht ist es vorgesehen, dass diese in Form einer UV-härtbaren und/oder Elektronenstrahlhärtbaren (ESH) Schutzschicht vorliegt. Hierfür sind insbesondere strahlenhärtbare acrylathaltige Lacke einsetzbar. Typischerweise enthalten die als Verschleißschicht verwendeten strahlenhärtbaren Lacke (Meth)acrylate, wie zum Beispiel Polyesther(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure-, Acrylether- und/oder Acrylsäureestermonomeren, Oligomeren oder Polymeren vorliegt. Von Bedeutung für das vorliegende Verfahren ist dabei die definitionsgemäße Präsenz eine Doppelbindung bzw. ungesättigten Gruppe im Acrylat-Molekül. Die Polyacrylate können auch weiterhin funktionalisiert vorliegen. Geeignete funktionelle Gruppen sind unter anderem Hydroxy-, Amino-, Epoxy- und/oder Carboxylgruppen. Wie erwähnt, ermöglichen die genannten Acrylate eine Vernetzung in Gegenwart von UV- bzw. Elektronenstrahlen im Härtungs- bzw. Trocknungsprozess.

In einer Ausführungsform wird bevorzugterweise mehr als eine strahlenhärtbare Schutzschicht, bevorzugt zwei oder drei Schutz- bzw. Verschleißschichten, angewendet, die jeweils aufeinander angeordnet oder aufgetragen werden. Auch kann die mindestens eine Schutz- bzw. Verschleißschicht chemische Vernetzer enthalten, zum Beispiel auf Isocyanat-Basis, wodurch die Zwischenhaftung der einzelnen übereinander angeordneten Schutz- bzw. Verschleißschichten erhöht wird.

In der strahlenhärtbaren Verschleißschicht, die auf der aufgedruckten Dekorschicht angeordnet ist, können neben den bereits oben angeführten abriebfesten Partikeln, wie zum Beispiel aus Korund oder Glas, natürlichen oder synthetische Fasern, auch weitere Additive, wie Flammschutzmittel und/oder luminiszierende Stoffe, zugegeben werden. Geeignete Flammschutzmittel können ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen. Als luminiszierende Stoffe können fluoreszierende oder phosphorisierende Stoffe, insbesondere Zinksulfit und Alkalialuminate zum Einsatz kommen.

In einer bevorzugten Ausführungsform sind in einer ersten strahlenhärtbaren Verschleißschicht verschleißhemmende Partikel wie Korund und in einer zweiten, auf der ersten Verschleißschicht, angeordneten strahlenhärtbaren Verschleißschicht Nanopartikel enthalten.

Die in der strahlenhärtbaren Schutzschicht bzw. Verschleißschicht der Variante b) verwendete Acrylatverbindung ist aufgrund ihrer Reaktivität in der Lage, sich an die in der Schutzschicht vorliegenden Fasern, abriebfesten Partikel oder Additive anzulagern bzw. diese zu umhüllen. Während des noch weiter unten beschriebenen Verpressens der Holzwerkstoffplatten bei erhöhter Temperatur, kommt es durch die Wirkung der Wärme und des angelegten Druckes zu einer chemischen Vernetzung der reaktiven Doppelbindung in der Acrylatverbindung und somit auch zu einer Ausbildung einer Polymerschicht auf den Fasern, Partikeln, Farbpigmenten oder Additiven, die einem Ausbleichen entgegenwirkt.

In einer weiteren Variante ist vorgesehen, auf die mit einer UV- und/oder ESH-Schutzschicht versehenen aufgedruckten Dekorschicht mindestens eine dreidimensionale (3D)-Struktur anzuordnen. Diese 3D-Struktur wird bevorzugterweise auf die Schutzschicht aufgedruckt oder mittels geeigneter Prägestrukturen eingeprägt bzw. eingedrückt. Die Strukturierungen können unter Verwendung von strukturierten Lackwalzen, strukturierten Kalandern oder strukturierten Pressblechen erfolgen. Bevorzugterweise ist die 3D-Struktur synchron zum aufgedruckten Dekor.

In einer weiteren Ausführungsform der vorliegenden Holzwerkstoffplatten ist es ebenfalls möglich, mindestens eine wärmehärtbare Harzschicht als Schutzschicht bzw. Verschleißschicht der Variante c) auf der bedruckten Dekorschicht zu verwenden. Dabei können ebenfalls mehrere wärmehärtbare Harzschichten verwendet werden, die übereinander angeordnet sind und entsprechend nacheinander aufgetragen werden.

Wie die strahlenhärtbare Schutzschicht kann auch die wärmehärtbare Harzschicht abriebfeste Partikel, natürliche und/oder synthetische Fasern und weitere Additive enthalten. Eine solche wärmehärtbare Harzschicht wird auch als Flüssigoverlay bezeichnet. Das wärmehärtbare Harz ist bevorzugt ein formaldehydhaltiges Harz, insbesondere ein Melamin-Formaldehyd-Harz und Melamin-Harnstoff-Formaldehyd-Harz. Als abriebfeste Partikel werden die bereits oben genannten Partikel, insbesondere Korund und Glaspartikel, verwendet. Darüber hinaus werden Härtungsmittel, Netz- und Trennmittel in einer derartigen Flüssigoverlayschicht bevorzugterweise eingesetzt.

Die mit der einen Verschleißschicht (z.B. Harzschicht) versehene Werkstoffplatte kann mit einer 3D-Prägestruktur versehen sein, wobei die Oberflächenstruktur bevorzugt in einer Kurztaktpresse optional synchron zum Dekor bei gleichzeitiger Laminierung aufgeprägt wird.

Die vorliegenden beschichteten Holzwerkstoffplatten sind für Möbel-, Paneel- oder Bodenbelagsanwendungen nutzbar. Die für die entsprechende Anwendung verwendete Oberflächenvergütung kann dabei bei entsprechender Auswahl an die spätere Nutzung angepasst werden. Ein wesentlicher Aspekt kann neben den dekorativen Anpassungen auch die Reduzierung von Raum- und Trittschall bei der Verwendung als Bodenbelag sein.

Eine Erhöhung von Raum- und Trittschalldämmung ist dabei z.B. durch den Einsatz einer Lederpartikelschicht, insbesondere einer Lederpartikelschicht aus Lederfaserstoff, sowohl auf der Oberseite als auch auf der Unterseite einer Holzwerkstoffplatte möglich.

Auch ist generell die Verwendung weiterer schalldämmender Schicht möglich. Solch eine Schicht kann z.B. auf der Unterseite der Trägerplatte, die der Oberflächensicht gegenüberliegt, angeordnet sein. Als schalldämmende Schichten kommen vernetzte PE-Matten mit Dicken von 1,0 mm oder 0,3 bis 3 mm dicke gefüllte Schwerfolien, aber auch geschäumte PE- oder PU-Folien zum Einsatz.

Geeignete Verriegelungsmittel an den Umfangskanten der vorliegenden Holzwerkstoffplatten zur horizontalen und/oder vertikalen Verriegelung derselbigen sind ebenfalls denkbar.

Insgesamt bieten die vorliegenden Holzwerkstoffplatten eine Vielzahl von Vorteilen. So können durch Verwendung von Dekorpapieren oder einer unmittelbar auf der Trägerplatte aufgedruckten Dekorschicht eine Vielzahl von beliebigen Dekoren erzeugt werden. Bei Anordnung von entsprechenden Schutzschichten sind die Oberflächen der Holzwerkstoffplatten mit Trägerplatten hergestellt aus Holzfasern und Lederpartikeln bzw. auf einer Trägerplatte angeordnetem Lederfaserstoff wesentlich verschleißfester und somit kann deren Anwendungsspektrum im Vergleich zu den bisher bekannten lederhaltigen Platten insbesondere bei Verwendung als Bodenbelagelement, deutlich vergrößert werden. Auch wird bei einem geeigneten Einsatz eines Lederfaserstoffes auf der Oberseite und der Unterseite eines Bodenbelagelementes der Raum bzw. Gehschall ebenfalls stark reduziert.

Die Herstellung der vorliegenden Holzwerkstoffplatte erfolgt in dem im Folgenden beschriebenen Verfahren.

So wird die vorliegende Holzwerkstoffplatte in einem Verfahren mit den folgenden Schritten hergestellt:
a) Herstellen von mindestens einer Trägerplatte, insbesondere aus Holzpartikeln oder aus einem Gemisch aus Holzpartikel und Lederpartikel,
b) Aufbringen von mindestens einer Schicht umfassend Lederpartikel auf die mindestens eine Trägerplatte und ggf. Vorbehandeln der Oberfläche der Lederpartikelschicht,
c) Aufdrucken von mindestens einer Dekorschicht auf die mindestens eine Schicht umfassend Lederpartikel,
d) Aufbringen von mindestens einer Verschleißschicht auf die mindestens eine aufgedruckte Dekorschicht, und
e) Aushärten der aufgetragenen Schichten mit der Trägerplatte.

Im Einzelnen umfasst ein Verfahren zur Herstellung einer vorliegenden Holzwerkstoffplatte mit einer Trägerplatte aus Holzfasern und Holzfasern / Lederpartikel die Schritte:
- Herstellen von Holzpartikeln, insbesondere Holzfasern, Holzspänen oder Strands, - ggf. Herstellen eines Gemisches aus Holzpartikeln und Lederpartikeln, insbesondere Lederfasern,
- In-Kontakt-bringen der Holzfasern oder des Gemisches aus Holzpartikeln und Lederpartikeln mit mindestens einem zur Vernetzung der Holzpartikel und/oder Lederpartikel geeigneten Bindemittels,
- Aufbringen der Mischung aus Holzpartikeln, Lederpartikeln und Bindemittel auf mindestens ein Transportband,
- Verpressen des auf das Transportband aufgebrachten Holzpartikel-Bindemittel-Gemisches oder Holzpartikel-Lederpartikel-Bindemittel-Gemisches zu einer Trägerplatte,
- Aufstreuen von mindestens einer Schicht aus Lederpartikeln, insbesondere Lederfasern oder Aufbringen eines Lederfaserstoffes, auf das auf das Transportband aufgebrachte Holzpartikel-Lederpartikel-Bindemittelgemisch,
- Vorbehandeln der Oberfläche der mindestens einen Lederpartikelschicht, insbesondere mittels Coronabehandlung, Plasmabehandlung und/oder durch Auftragen von mindestens einer Primerschicht,
- Aufdrucken von mindestens einer Dekorschicht auf die vorbehandelte Lederpartikelschicht,
- Aufbringen der mindestens einen Verschleißschicht auf die Dekorschicht , und
- Aushärten bzw. Verpressen zur fertigen Holzwerkstoffplatte.

Das Verpressen bzw. Aushärten kann dabei in einer Kurztaktpresse bei Temperaturen zwischen 150 und 250 °C, bevorzugt 170 bis 220 °C mit Presszeiten ab 7 sec erfolgen.

Im Einzelnen umfasst eine weitere Ausführungsform des Verfahrens zur Herstellung der vorliegenden Holzwerkstoffplatte folgende Schritte:
- Herstellen von Holzpartikeln, insbesondere Holzfasern, Holzspänen oder Strands,
- In-Kontakt-bringen der Holzpartikel mit mindestens einem zu Vernetzung der Holzpartikel geeigneten Bindemittel,
- Aufbringen der Mischung von Holzpartikeln und dem mindestens einem zur Vernetzung der Holzfasern geeigneten Bindemittel auf mindestens ein Transportband,
- Auflegen von mindestens einer Schicht aus Lederpartikel, insbesondere Lederfasern oder mindestens einem Lederfaserstoff, auf die Oberseite und/oder Unterseite des auf das Transportband aufgebrachten Holzpartikel-Bindemittel-Gemisches, und
- Verpressen bzw. Kaschieren des mit den Lederpartikeln, insbesondere mit den Lederfasern oder dem Leserfaserstoff auf der Oberseite und/oder Unterseite versehenen Holzpartikel-Bindemittel-Gemisches, insbesondere bei Temperaturen zwischen 100°C und 170 °C, bevorzugt 130 °C und 150 °C, insbesondere bei 130 °C,
- Vorbehandeln der Oberfläche der mindestens einen Lederpartikelschicht, insbesondere mittels Coronabehandlung, Plasmabehandlung und/oder durch Auftragen von mindestens einer Primerschicht z.B. einer Isocyanatgruppen haltigen Primerschicht"
- Aufdrucken von mindestens einer Dekorschicht auf die bevorzugt vorbehandelte Lederpartikelschicht, und
- Aufbringen von mindestens einer Verschleißschicht auf die mindestens eine Lederpartikelschicht, insbesondere Lederfaserschicht bzw. auf den Lederfaserstoff, und
- Aushärten bzw. Verpressen der aufgetragenen Schichten mit der Trägerplatte.

In einer Variante des Verfahrens ist vorgesehen, dass auf die mindestens eine Lederpartikelschicht eine Dekorschicht, z.B. in Form einer aufgedruckten Dekorschicht mit strahlenhärtbarer Verschleißschicht (Variante b) oder wärmehärtbaren Harzschicht (Variante c) aufgetragen wird.

Bei Verwendung einer strahlenhärtbaren Verschleißschicht beträgt die Auftragsmenge zwischen 50 und 100 g/m2, bevorzugt 60 bis 80 g/m2, die zunächst mittels Stahlung z.B. ESH-Strahlung ggf. angeliert wird und abschließend ausgehärtet wird. Im Falle von mehr als einer strahlenhärtbaren Verschleißschicht erfolgen zunächst die Angelierung der ersten und ggf. zweiten Verschließschicht bevor die abschließende Verschleißschicht (Top-Schicht) aufgetragen wird und der gesamte Auftrag mittels Strahlung (z.B. ESH-Strahlung) durchgehärtet wird.

Die Verschleißschicht aus mindestens einem wärmehärtbaren Harz, einem UV-härtbaren Lack und/oder einem ESH-Lack kann anschließend verpresst werden und/oder mit einer 3D-Oberflächenstruktur versehen werden z.B. durch Prägen in einer Kurztaktpresse im Falle eine wärmehärtbaren Harzes oder Drucken und/oder Prägen im Falle eines UV- oder ESH-Lackes.

Zur Herstellung der Holzpartikel werden Holzhackschnitzel zunächst gereinigt, anschließend zerfasert bzw. zerspant und getrocknet.

Das In-Kontakt-Bringen des Gemisches aus Holzpartikel und Lederpartikel mit mindestens einem zur Vernetzung geeigneten Bindemittel oder das In-Kontakt-Bringen der Holzpartikel mit mindestens einem zur Vernetzung geeigneten Bindemittel erfolgt bevorzugt in einem Blow-Line-Verfahren, bei dem das Bindemittel in den Holzpartikelstrom bzw. in den Strom des Gemisches aus Holzpartikel und Lederpartikel eingespritzt wird. Hierbei ist es möglich, dass das zur Vernetzung geeignete Bindemittel in der Blow-Line einem Holzpartikel-Dampfgemisch bzw. einem Holzpartikel-Lederpartikel-Dampfgemisch zugeführt wird.

Geeignete Bindemittel zur Vernetzung der Holzpartikel bzw. Holzpartikel-Lederpartikel sind bevorzugterweise ausgewählt aus der Gruppe der Isocyanate, Phenolharze oder Formaldehyd-Harze, wie oben bereits beschrieben.

Zu beachten ist, dass das für die Vernetzung der Holzpartikel bzw. Holzpartikel-Lederpartikel verwendete Bindemittel sich von dem Bindemittel unterscheiden kann, das z.B. zum Verbinden einer Lederfaserstoffschicht mit der Trägerplatte unterscheiden kann oder aber auch gleich sein kann. So kann der Lederfaserstoff bzw. die Lederfaserstoffschicht z.B. mit einem Polyvinyl-Kleber wie Polyvinylacetat (PVAc) auf die Trägerplatte aufgeklebt werden.

Es ist auch denkbar, das Bindemittel zur Vernetzung der Holzpartikel bzw. Holzpartikel-Lederpartikel während des Dämpfens der Hackschnitzel einzuführen oder im Refiner zuzugeben. Dabei können 5 bis 20 Gew%, bevorzugt 10 bis 15 Gew% an Bindemittel auf die Holzpartikel bzw. das Gemisch aus Holzpartikel-Lederpartikel aufgetragen werden.

Wie oben erwähnt, können dem Gemisch aus Holzpartikel und Lederpartikel aber auch natürlich dem Holzpartikelgemisch als solchem, d.h. ohne Lederpartikel, ein Flammschutzmittel zugegeben werden. Die Zugabe des Flammschutzmittels kann zu jedem Zeitpunkt während des Herstellungsprozesses der Trägerplatte zugegeben werden. So kann das Flammschutzmittel zusammen mit dem Bindemittel in den Holzpartikel-Strom bzw. Holzpartikel-Lederpartikel-Strom eingespritzt werden oder kann nach Aufstreuen oder Aufblasen des Holzfaser/Lederpartikel/Bindemittelgemisches auf das Transportband auf dasselbige aufgesprüht werden.

Nach Auftragen z.B. durch Streuen oder Aufblasen der Mischung aus Holzpartikel oder Holzpartikel/Lederpartikel, Bindemittel und ggf. Flammschutzmittel auf ein Transportband unter Ausbildung einer Matte, kann zunächst ein Vorpressen erfolgen, bei der die Dicke der Matte im Rahmen einer kalten Vorverdichtung reduziert wird.

Wird ein Gemisch aus Holzpartikel und Lederpartikel zu einer Trägerplatte verarbeitet, wird diese auf dem Transportband aufgelegte Matte kontinuierlich oder diskontinuierlich verpresst. Vor dem Verpressen der Lederpartikel-Holzpartikel-Matte kann eine weitere Schicht aus Lederpartikeln auf die Ober- und/oder Unterseite der Holzpartikel-Lederpartikel-Matte aufgelegt werden. Auch hier erfolgt anschließend ein kontinuierliches oder diskontinuierliches Heißpressen zur Herstellung einer mit Lederpartikeln vergüteten Trägerplatte.

Nach dem Vorpressen bzw. Heißpressen der Partikelmatten kann eine Mattenbesäumung durchgeführt werden, während der Seitenstreifen von der Fasermatte abgetrennt werden und die Seitenstreifen in den Prozess zurückgeführt werden.

Hiernach schließen sich die bereits genannten Schritte der Vorbehandlung der Lederpartikelschicht zur Anpassung der Oberflächenspannung und das Aufdrucken einer Dekorschicht an. Der Schritt des Vorbehandelns der Oberfläche der Lederschicht erfolgt bevorzugt mittels Coronabehandlung, Plasmabehandlung und/oder durch Auftragen von mindestens einer Primerschicht, wie oben detailliert bereits beschrieben wurde.

Im Falle des Aufdruckens einer Dekorschicht folgt nachfolgend der Schritt des Auftragens einer Verschleißschutzschicht in Form eines UV- oder ESH-Lacks.

Das anschließende Kalibrieren bzw. Verdichten oder Verpressen der so Oberflächenvergüteten Matten bzw. Trägerplatten kann bei Temperaturen zwischen 100 und 250 °C, bevorzugt 130 und 220 °C, insbesondere bei 200 °C erfolgen.

Während des Kalibrierens bzw. Verpressens kommt es typischerweise zu einer Aktivierung des Bindemittels im Holzpartikelgemisch oder Holzpartikel-Lederpartikelgemisch, wodurch eine feste Verbindung zwischen den Holzfasern und dem Bindemittel hergestellt wird.

In der Endbearbeitung wird die Holzwerkstoffplatte schließlich auf die gewünschten Maße reduziert und gekühlt.

Die Erfindung wird nachfolgend unter Bezugnahme auf die Figuren der Zeichnungen an mehreren Ausführungsbeispielen näher erläutert. Es zeigen:
- Figur 1a: eine schematische Querschnittsansicht einer ersten Ausführungsform der vorliegenden Holzwerkstoffplatte,
- Figur 1b: eine schematische Querschnittsansicht einer zweiten Ausführungsform der vorliegenden Holzwerkstoffplatte, und
- Figur 2: eine schematische Übersicht der Varianten der vorliegenden Holzwerkstoffplatten und deren Herstellung.

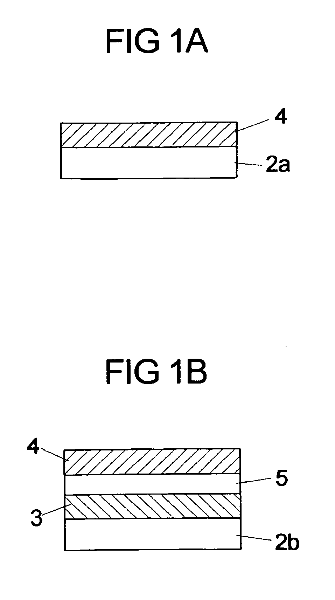

Figur 1a zeigt eine Holzwerkstoffplatte 1 mit einer Trägerplatte 2a, die aus einem Gemisch aus Holzfasern und Lederfasern hergestellt wurde, auf welcher eine Verschleißschicht 4 angeordnet ist. Die Verschleißschicht 4 besteht vorliegend aus Melaminharz als Bindemittel, gefärbten Lederpartikeln, Korundpartikel und weiteren Pigmenten.

Figur 1b zeigt eine Ausführungsform einer erfindungsgemäßen Holzwerkstoffplatte 1 mit einer Trägerplatte 2b aus Holzfasern, auf welcher zunächst ein Lederfaserstoff 3 angeordnet ist. Der Lederfaserstoff 3 ist mit einer aufgedruckten Dekorschicht 5 versehen. Auf dem Druckdekor 5 wiederum ist ein ESH-Lack enthaltend Korundpartikel als Verschleißschicht 4 angeordnet.

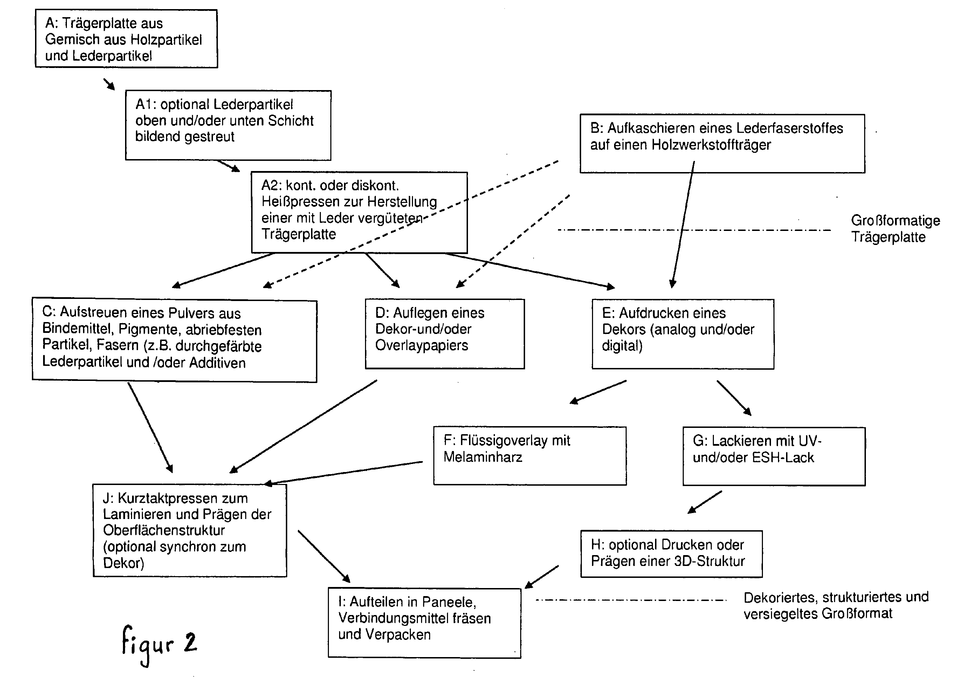

Figur 2 zeigt eine Übersicht bzw. einen Überblick über die verschiedenen Ausführungsformen von Holzwerkstoffplatten und deren Herstellung. In einem ersten Schritt werden vorliegend großformatige Trägerplatten hergestellt.

Dabei kann gemäß Variante A zur Herstellung einer Trägerplatte ein Gemisch aus Holzpartikel und Lederpartikel eingesetzt werden. Dieses Gemisch aus Holzpartikel, insbesondere Holzfasern, und Lederpartikel, wie zum Beispiel Lederfasern, wird mit einem geeigneten Bindemittel vermischt und auf ein Transportband aufgebracht, zum Beispiel aufgestreut oder aufgeblasen. Hier ist es möglich, zunächst die Lederpartikel auf ein langes Transportband zu streuen, gefolgt von Holzpartikeln. Dies ermöglicht den Aufbau eines Kuchens aus Lederpartikeln und Holzpartikeln. Das aufgestreute Gemisch wird in einer Presse zu einer Lederpartikel-Holzpartikel-Matte gepresst.

In einer weiterführenden Variante A1 kann auf diese auf dem Transportband ausgebildete Matte aus Holzpartikel und Lederpartikel eine weitere Schicht aus Lederpartikelauf die Oberseite der Matte aufgestreut werden. Die sich auf dem Transportband befindliche Matte wird in einer Weiterführung gemäß Variante A2 kontinuierlich oder diskontinuierlich in einer Heißpresse verpresst und eine mit Lederpartikeln vergütete Trägerplatte als eine Variante einer großformatigen Trägerplatte hergestellt.

In einer weiteren Variante B besteht die großformatige Trägerplatte aus einer Holzwerkstoffträgerplatte, insbesondere einer Span-, mitteldichten Faser- (MDF)-, hochdichten Faser- (HDF)-, Grobspan (OSB)- oder Sperrholzplatte oder auch einer Zementfaserplatte und/oder Gipsfaserplatte, auf welche eine Bahn aus Lederpartikeln aufkaschiert ist. In der vorliegenden Ausführungsform der Variante B wird zum Aufkaschieren eine Platte bzw. eine Lage aus einem Lederfaserstoff aufkaschiert, wobei dieser Lederfaserstoff aus zerkleinerten, pflanzlich gegerbten Lederresten, Naturlatex als Bindemittel, natürlichen Fetten und Gerbstoffen sowie aus chromfreien Falzspänen hergestellt wird. Das Aufkaschieren des Lederfaserstoffes erfolgt bei Temperaturen zwischen 100 und 170 °C, bevorzugt 130 und 150 °C, insbesondere bei 130 °C.

Die großformatigen Trägerplatten gemäß der Variante A und der Variante B können im Folgenden vielfältige Oberflächenvergütungen unterzogen werden,

So kann auf eine großformatige Trägerplatte der Variante A ein Pulver enthaltend Melaminharz als Bindemittel, abriebfeste Partikel, Pigment, Lederpartikel, die optional auch gefärbt sein können, sowie weitere Additive wie Flammschutzmittel oder leitfähige Substanzen aufgestreut werden (Variante C).

Es ist aber auch möglich, anstatt eine Pulvers, ein geeignetes bedrucktes Dekorpapier und/oder ein imprägniertes Overlaypapier auf die großformatigen Trägerplatten aufzulegen (Variante D).

Variante C und Variante D eigenen sich dabei bevorzugt zur Modifizierung bzw. Oberflächenvergütung von Trägerplatten hergestellt aus einem Holzpartikel-Lederpartikel-Gemisch.

Darüber hinaus kann auf eine großformatige Trägerplatte der Variante A oder auch auf eine großformatige Trägerplatte der Variante B mit aufkaschiertem Lederfaserstoff direkt ein Dekor auf eine gegebenenfalls bearbeitete, zum Beispiel gereinigte, Oberfläche aufgedruckt werden, wobei das Dekor mittels analoger oder digitaler Drucktechniken oder einer Kombination davon aufgedruckt werden kann (Variante E).

Die mittels analoger oder digitaler Technik bedruckten großformatigen Trägerplatten werden anschließend mit einer geeigneten Schutzschicht versehen. Auch hier gibt es verschiedene Varianten einer geeigneten Schutzschicht.

So kann gemäß Variante G auf die aufgedruckte Dekorschicht ein strahlenhärtbarer Acrylatlack aufgetragen werden, der unter UV- bzw. Elektronenstrahlung anschließend ausgehärtet wird und gegebenenfalls mit einer dreidimensionalen Struktur mittels Strukturprägung oder Strukturdrucken versehen wird (Variante H).

Neben dem Lackieren mit einem strahlenhärtbaren Lack kann die aufgedruckte Dekorschicht auch mit einem so genannten Flüssigoverlay mit einem wärmehärtbaren Harz, wie zum Beispiel einem wärmehärtbaren Melaminharz, versehen werden (Overlayschicht gemäß Variante F). In diese Flüssigoverlayschicht werden zum Zwecke der Erhöhung der Haltbarkeit und der Verringerung des Verschleißes abriebfeste Partikel, wie zum Beispiel Korundpartikel oder Glaspartikel sowie natürliche Fasern, wie zum Beispiel Zellulosefasern oder auch Holzfasern, eingefügt.

Die gemäß der Varianten C, D und F oberflächenvergüteten großformatigen Trägerplatten können zur Versiegelung einer Kurztaktpresse zum Laminieren und gegebenenfalls zum Prägen einer Oberflächenstruktur, die zum Beispiel optional synchron zum Dekor sein kann, zugeführt werden (Variante J).

Die in den vorhergehenden Schritten beschriebenen Trägerplatten, die nunmehr dekoriert, strukturiert und versiegelt vorliegen, werden in einem letzten Schritt I in Paneele von geeigneter Größe aufgeteilt, gefräst und verpackt.

### Ausführungsbeispiel 1: Herstellen einer Trägerplatte aus einem Gemisch aus Holzpartikeln und Lederpartikeln mit einer pulverförmigen Schutzschicht (Variante A+C in Figur 2)

Zunächst wird eine dünne Faser- oder Spanplatte aus einem Gemisch aus Holzspänen oder Holzfasern, Lederfalzspänen und Bindemittel hergestellt.

Hierfür werden bevorzugt Holzfasern mit einer Länge von 1,5 bis 10 mm, und einer Dicke von 0,05 mm bis 1 mm mit Lederfalzspänen mit einer Länge von 5 bis 15 mm und einer Dicke von 0,5 bis 1 mm mit einem Melamin-Formaldehyd-Harz als duroplastischen Bindemittel oder anderen geeigneten duroplastischen Bindemitteln versetzt. Zur Erhöhung der Flammfestigkeit werden geeignete Flammschutzmittel, bevorzugt Ammoniumpolyphosphat zugegeben. Das Verhältnis von Holzfasern zu Lederfalzspänen und Flammschutzmittel beträgt: 65 Gew% beleimte Holzfasern, 20 Gew% beleimte Lederfasern und 15 Gew% Flammschutzmittel.

Das Gemisch aus beleimten Holzfasern, beleimten Lederfasern und Flammschutzmittel wird auf ein Transportband aufgebracht, z.B. aufgestreut oder aufgelegt, und zu einer

Trägerplatte heißgepresst, z.B. bei Temperaturen zwischen 220-270°C. Nach dem Verpressen wird die Oberfläche der Trägerplatte geschliffen.

Auf die geschliffene Platte wird ein Gemisch aus Melaminharzpulver, Korund, Lederfalzspänen, die eingefärbt oder nicht eingefärbt sein können, Pigmenten und Hilfsstoffen (Härter, Trennmittel usw.) mit Hilfe einer oder mehrerer Streuvorrichtung aufgestreut. Die Platte wird dann zusammen mit einem harzimprägnierten Gegenzugpapier in eine KT-Presse überführt und bei hohen Drücken und hohen Temperaturen ausgehärtet (T=150 - 210 °C, p = 20 - 50 bar). In der Presse befindet sich ein strukturiertes Pressblech, dessen Struktur beim Pressvorgang auf die Harzmatrix übertragen wird.

### Ausführungsbeispiel 2: Auflegen eines Dekor- und/oder Overlaypapiers auf eine Trägerplatte aus Holzpartikeln und Lederpartikeln (Variante D in Figur 2)

Zunächst wird eine dünne Faser- oder Spanplatte aus einem Gemisch aus Spänen oder Fasern, Lederfalzspänen und Bindemittel hergestellt (siehe Ausführungsbeispiel 1).

Danach wird die Platte geschliffen und dann mit einem harzimprägnierten Dekor- und Overlayimprägnat auf der Oberseite belegt. Als Harze können Melamin- und oder Harnstoffharze verwendet werden.

Die Platte wird dann zusammen mit einem harzimprägnierten Gegenzugpapier in eine KT-Presse überführt und bei hohen Drücken und hohen Temperaturen ausgehärtet (T=150 - 210 °C, p = 20 - 50 bar). In der Presse befindet sich ein strukturiertes Pressblech, dessen Struktur beim Pressvorgang auf die Harzmatrix übertragen wird.

### Ausführungsbeispiel 3: Aufdrucken einer Dekorschicht auf eine Trägerplatte aus Holzpartikeln und Auftragen eines Flüssigoverlays und anschließende Strukturprägung (Variante B+E+F+J in Figur 2)

Auf eine HDF-Trägerplatte, die bereits eine Rückseitenbeschichtung in Form eines Papier- oder Foliengegenzugs besitzt wird, wird manuell oder automatisiert eine Lederfaserstoffbeschichtung aufgebracht. Dabei wird auf die Oberseite der HDF ein PVAc-Kleber in einer Menge von ca. 150 g/m² aufgewalzt/aufgetragen. Der Kleber kann je nach Bedarf einen Härter (z.B.: PU-Vernetzer) enthalten (ca. 5 Gew.%.). Anschließend wird eine Bahn eines Lederfaserstoffes auf die Klebstoffschicht aufgelegt. Die beiden Platten werden in einem Kalander oder in einer Taktpresse aufeinander aufgepreßt. Danach werden die Platten abgestapelt und der Klebstoff aushärten lassen.

Die oberseitig mit dem Lederfaserstoff versehene bzw. kaschierte HDF-Platte wird in einer Reinigungsvorrichtung zunächst auf der Oberseite gereinigt. Dann wird je nach Dekor im Walzenauftrag eine Grundierung aufgebracht und getrocknet (ca. 3-8 g/m²). Dies kann einmal oder mehrmals erfolgen, abhängig von dem gewünschten Grad der Abdeckung des Untergrunds.

Dann wird mit einer Druckanlage entweder im indirekten Tiefdruck oder im Digitaldruck ein Dekor aufgebracht. Bei der Verwendung des indirekten Tiefdrucks werden mehrere Druckwalzen eingesetzt. Beim Digitaldruck wird mit mindestens vier Farben (CMYK) gearbeitet. Bei Bedarf kann auch zur Vorbereitung weiterer Veredelungsschritte ein Primer und/oder eine Schutzschicht aufgebracht werden.

Danach werden im Walzenauftrag mehrere Harzschichten aufgebracht, die im Wesentlichen aus wäßrigen Melamin- und/oder Harnstoffharz bestehen. Der Auftrag erfolgt ober- und unterseitig. In den Harzen befinden sich Hilfsstoffe, die die Verarbeitung und die Härtung unterstützen (Netzmittel, Trennmittel, Härter, Cellulose usw.). Weiterhin sind verschleißhemmende Stoffe (Korund, Siliziumdioxid usw.) und Glaskugeln enthalten. Die Harze werden im Walzenauftrag in mehreren Schichten aufgebracht und nach jedem Auftrag zwischengetrocknet.

Anschließend werden die beschichteten Platten in einer KT-Presse bei hohem Druck und hoher Temperatur ausgehärtet (T = 150 - 210 °C, p = 15 - 40 bar). In der KT-Presse befindet sich ein strukturiertes Blech, das seine Struktur beim Pressvorgang auf die Platte überträgt.

### Ausführungsbeispiel 4: Aufdrucken einer Dekorschicht auf eine Trägerplatte aus Holzpartikeln und Auftragen eines strahlenhärtbaren Lackes und anschließende Strukturprägung (Variante B+E+G+H in Figur 2)

Eine gemäß Ausführungsbeispiel 3 oberseitig mit einem Lederfaserstoff versehene bzw. kaschierte HDF-Platte wird in einer Reinigungsvorrichtung zunächst auf der Oberseite gereinigt.

Dann wird je nach Dekor im Walzenauftrag eine Grundierung aufgebracht und getrocknet (ca. 3-8 g/m²). Dies kann einmal oder mehrmals erfolgen, abhängig von dem gewünschten Grad der Abdeckung des Untergrunds.

Dann wird mit einer Druckanlage entweder im indirekten Tiefdruck oder im Digitaldruck ein Dekor aufgebracht. Bei der Verwendung des indirekten Tiefdrucks werden mehrere Druckwalzen eingesetzt. Beim Digitaldruck wird mit mindestens vier Farben (CMYK) gearbeitet. Bei Bedarf kann auch zur Vorbereitung weiterer Veredelungsschritte ein Primer und/oder eine Schutzschicht aufgebracht werden.

Danach werden auf die bedruckte und gegebenenfalls geprimerte Platte mehrere Lackschichten aufgebracht. Bei den Lacken kann es sich alle üblicherweise verwendeten Lacke handeln (PU-, Polyester- oder Acrylatlacke). Im vorliegenden Fall wurde ein Acrylatlack-System eingesetzt. Dabei wurde zunächst ein Grundlack aufgebracht, der zur Erhöhung der Abriebfestigkeit verschleißhemmende Partikel (Korund) enthielt. Der Lack wurde in einer Menge von 80 g/m² aufgewalzt oder gegossen. Anschließend erfolgte eine Anhärtung mit Hilfe von UV- oder Elektronen-Strahlung.

Danach wurde ein elastischer Zwischenlack aufgebracht (Acrylatlack, 80 g/m²). Dieser wurde ebenfalls mit Hilfe der oben beschriebenen Methoden angehärtet. Abschließend wurde ein Decklack aufgebracht (Acrylatlack, ca. 10 g/m²), der durch die in ihm enthaltenen Nanopartikel eine hohe Kratzfestigkeit gewährleisten soll. Dieser Auftrag kann mit einer strukturierten Walze erfolgen, die ihre Struktur auf die Oberfläche der Platte überträgt. Der gesamte Aufbau wird durch eine Endhärtung mit Elektronenstrahlung ausgehärtet.

### Ausführungsbeispiel 5: Aufdrucken einer Dekorschicht auf einen behandelten Lederfaserstoff auf einer Trägerplatte aus Holzpartikeln und Auftragen eines strahlenhärtbaren Lackes (Variante B+E+G in Figur 2)

Eine HDF-Platte wird auf der Oberseite mit einem 2,7 mm starken Pad eines Lederfaserstoffs, der aus chromfrei gegerbten Lederfalzspänen hergestellt wurde, und auf der Unterseite mit einem Gegenzug auf Basis Kraftpapier beklebt. Das Pad aus Lederfalzspänen wurde aus hellen Spänen hergestellt. Zur Verklebung wurde ein PVAc-Kleber eingesetzt. Die Auftragsmenge des Klebstoffs lag auf der Oberseite bei 200 g Klebstoff/m² ( fl. ) und auf der Unterseite bei ca. 80 g Klebstoff/m² ( fl. ). Die Platten wurden zur Aushärtung des Klebers ca. 48 h im Stapel gelagert. Dann wurden die beschichteten Platten in einer Produktionslinie durch eine Bürstenmaschine von anhaftenden losen Fasern und Schmutz befreit. Anschließend wird auf die gereinigte Oberfläche eine Primer auf Basis von Isocyanat in einer Menge von ca. 20 g/m² aufgetragen (Produkt: 687.00, Fa. Jowat). Der Primer dient zur Vergleichmäßigung der Oberflächenspannung und der Verfestigung der Oberfläche des Lederfaserstoffs. Anschließend wurde der Primer in einem Umluft-Ofen im Durchlauf getrocknet. Die Verweilzeit im Ofen betrug ca. 15 sec bei ca. 110 °C. Danach wurde auf die Oberfläche mit einem Digitaldrucker zunächst eine Schicht weiß und dann ein Holzdekor gedruckt. Die verwendeten Tinten werden durch UV-Strahlung ausgehärtet. Auf den Druck werden mehrere Schichten UV-Lack aufgebracht, wobei in der ersten Schicht verschleißhemmende Partikel ( Korund ) enthalten sind ( Auftragsmenge: 80 g/m² ). Die gesamte Lackschicht wird mit Hilfe von ESH-Strahlung angeliert. Daran schließt sich der Auftrag eines sogenannten Schleifgrundes an ( Auftragsmenge: ca. 60g/m² ). Auch dieser Lack wird durch ESH-Strahlung angeliert. Zum Schluss erfolgt der Auftrag eines Top-Coats, der ebenfalls ein ESH-Lack ist. Dieser Lack enthält Nanopartikel zur Verbesserung der Kratzfestigkeit ( Auftragsmenge: ca. 20g/m² ). Der gesamte Lackauftrag wird dann mit Hilfe von ESH-Strahlung durchgehärtet.

## Patentansprüche

1. Holzwerkstoffplatte (1) umfassend
- mindestens eine Trägerplatte (2a, 2b),
- mindestens eine auf einer Seite der Trägerplatte (2a, 2b) angeordnete Schicht umfassend Lederpartikel (3),
- mindestens eine auf der Schicht aus Lederpartikeln (3) aufgedruckte Dekorschicht (5) und
- mindestens eine auf der aufgedruckten Dekorschicht (5) angeordnete Verschleißschicht (4), wobei die mindestens eine Verschleißschicht (4) als mindestens eine Schicht umfassend natürliche oder synthetische Fasern, mindestens ein Bindemittel, abriebfeste Partikel, Pigmente und mindestens ein Additiv ausgebildet ist.

2. Holzwerkstoffplatte nach Anspruch 1, **dadurch gekennzeichnet, dass** die mindestens eine Trägerplatte (2a, 2b) aus Holzpartikeln oder einem Gemisch aus Holzpartikeln und Lederpartikeln besteht.

3. Holzwerkstoffplatte nach einem der vorhergehenden Ansprüche, **dadurch gekennzeichnet, dass** die Lederpartikel als Lederfasern ausgebildet sind.

4. Holzwerkstoffplatte nach einem der vorhergehenden Ansprüche, **dadurch gekennzeichnet, dass** die Lederpartikel umfassende Schicht (3) als Lederfaserstoff ausgebildet ist.

5. Holzwerkstoffplatte nach Anspruch 4, **dadurch gekennzeichnet, dass** der Lederfaserstoff eine Dicke zwischen 0,4 und 5,5 mm, bevorzugt zwischen 0,5 und 3 mm, insbesondere bevorzugt zwischen 1 und 2 mm aufweist.

6. Holzwerkstoffplatte nach einem der vorhergehenden Ansprüche, **dadurch gekennzeichnet, dass** die mindestens eine Verschleißschicht (4) eine strahlenhärtbare Verschleißschicht, insbesondere eine UV-härtbare und/oder Elektronenstrahlhärtbare (ESH) Schutzschicht ist.

7. Holzwerkstoffplatte nach einem der vorhergehenden Ansprüche, **dadurch gekennzeichnet, dass** mehr als eine Verschleißschicht (4), bevorzugt zwei oder drei Verschleißschichten aufeinander angeordnet sind.

8. Holzwerkstoffplatte nach einem der vorhergehenden Ansprüche, **dadurch gekennzeichnet, dass** in und/oder auf der mindestens einen Verschleißschicht (4) mindestens eine 3D-Struktur vorgesehen ist.

9. Holzwerkstoffplatte nach einem der vorhergehenden Ansprüche, **dadurch gekennzeichnet, dass** die Oberfläche der mindestens einen Lederpartikelschicht (3) vor dem Bedrucken, insbesondere mittels Coronabehandlung oder Plasmabehandlung, vorbehandelt wird.

10. Holzwerkstoffplatte nach einem der vorhergehenden Ansprüche, **dadurch gekennzeichnet, dass** auf die Oberfläche der mindestens einen Lederpartikelschicht (3) vor dem Bedrucken mindestens eine Primerschicht, insbesondere eine Isocyanatgruppen haltige Primerschicht, aufgetragen wird.

11. Verwendung einer Holzwerkstoffplatte nach einem der vorhergehenden Ansprüche als Bodenbelagelement, Möbelelement und /oder Wandelement.

12. Verfahren zur Herstellung einer Holzwerkstoffplatte nach einem der Ansprüche 1 bis 10 umfassend die Schritte
a) Herstellen von mindestens einer Trägerplatte (2a, 2b), insbesondere aus Holzpartikeln oder aus einem Gemisch aus Holzpartikel und Lederpartikel,
b) Aufbringen von mindestens einer Schicht umfassend Lederpartikel (3) auf die mindestens eine Trägerplatte (2a, 2b),
c) Aufdrucken von mindestens einer Dekorschicht (5) auf die mindestens eine Schicht umfassend Lederpartikel (3),
d) Aufbringen von mindestens einer Verschleißschicht (4) auf die mindestens eine aufgedruckte Dekorschicht (5), und
e) Aushärten der aufgetragenen Schichten (3, 4, 5) mit der Trägerplatte (2a, 2b).

13. Verfahren nach Anspruch 12, **dadurch gekennzeichnet, dass** vor dem Aufdrucken der mindestens einen Dekorschicht (5) auf die mindestens eine Lederpartikelschicht (3) die Oberfläche der mindestens einen Lederpartikelschicht (3), insbesondere mittels Coronabehandlung, Plasmabehandlung und/oder durch Auftragen von mindestens einer Primerschicht, vorbehandelt wird.

14. Verfahren nach Anspruch 12 oder 13, **dadurch gekennzeichnet, dass** die mindesten eine Dekorschicht (5) unter Verwendung von Tiefdruck- und Digitaldruckverfahren oder einer Kombination davon auf die Lederpartikelschicht (3) aufgedruckt wird.

## Claims

1. Wood material panel (1) comprising
- at least one support panel (2a, 2b),
- at least one layer which comprises leather particles (3) and is disposed on one side of the support panel (2a, 2b),
- at least one decoration layer (5) printed on the layer made of leather particles (3) and
- at least one wear layer (4) disposed on the printed decoration layer (5), wherein the at least one wear layer (4) is designed as at least one layer comprising natural or synthetic fibres, at least one binder, abrasion-resistant particles, pigments and at least one additive.

2. Wood material panel according to Claim 1, **characterized in that** the at least one support panel (2a, 2b) consists of wood particles or a mixture of wood particles and leather particles.

3. Wood material panel according to either preceding claim, **characterized in that** the leather particles are leather fibres.

4. Wood material panel according to any preceding claim, **characterized in that** the layer (3) comprising leather particles is bonded leather.

5. Wood material panel according to Claim 4, **characterized in that** the bonded leather has a thickness of between 0.4 and 5.5 mm, preferably between 0.5 and 3 mm, more preferably between 1 and 2 mm.

6. Wood material panel according to any preceding claim, **characterized in that** the at least one wear layer (4) is a radiation-curable wear layer, particularly a UV-curable and/or electron beam-curable (EBC) protective layer.

7. Wood material panel according to any preceding claim, **characterized in that** more than one wear layer (4), preferably two or three wear layers, are disposed on top of one another.

8. Wood material panel according to any preceding claim, **characterized in that** at least one 3D structure is provided in and/or on the at least one wear layer (4).

9. Wood material panel according to any preceding claim, **characterized in that** the surface of the at least one leather particle layer (3) is pretreated, particularly by corona treatment or plasma treatment, prior to printing.

10. Wood material panel according to any preceding claim, **characterized in that** at least one primer layer, particularly an isocyanate-containing primer layer, is applied to the surface of the at least one leather particle layer (3) prior to printing.

11. Use of a wood material panel according to any preceding claim as a floor covering element, furniture element and/or wall element.

12. Process for producing a wood material panel according to any of Claims 1 to 10 comprising the steps of
a) producing at least one support panel (2a, 2b), particularly from wood particles or a mixture of wood particles and leather particles,
b) applying at least one layer comprising leather particles (3) onto the at least one support panel (2a, 2b),
c) printing at least one decoration layer (5) onto the at least one layer comprising leather particles (3),
d) applying at least one wear layer (4) onto the at least one printed decoration layer (5), and
e) curing the applied layers (3, 4, 5) with the support panel (2a, 2b).

13. Process according to Claim 12, **characterized in that** it comprises pretreating the surface of the at least one leather particle layer (3), particularly by corona treatment, plasma treatment and/or by applying at least one primer layer, prior to printing the at least one decoration layer (5) onto the at least one leather particle layer (3).

14. Process according to either of Claims 12 and 13, **characterized in that** the at least one decoration layer (5) is printed onto the leather particle layer (3) using gravure and digital printing processes or a combination thereof.

## Revendications

1. Plaque de matériau à base de bois (1), comprenant :
- au moins une plaque support (2a, 2b),
- au moins une couche comprenant des particules de cuir (3) agencée sur un côté de la plaque support (2a, 2b),
- au moins une couche décorative (5) imprimée sur la couche de particules de cuir (3) et
- au moins une couche d'usure (4) agencée sur la couche décorative imprimée (5), la ou les couches d'usure (4) étant configurées sous la forme d'au moins une couche comprenant des fibres naturelles ou synthétiques, au moins un liant, des particules résistantes à l'abrasion, des pigments et au moins un additif.

2. Plaque de matériau à base de bois selon la revendication 1, **caractérisée en ce que** la ou les plaques supports (2a, 2b) sont constituées de particules de bois ou d'un mélange de particules de bois et de particules de cuir.

3. Plaque de matériau à base de bois selon l'une quelconque des revendications précédentes, **caractérisée en ce que** les particules de cuir sont configurées sous la forme de fibres de cuir.

4. Plaque de matériau à base de bois selon l'une quelconque des revendications précédentes, **caractérisée en ce que** la couche comprenant des particules de cuir (3) est configurée sous la forme de cuir reconstitué.

5. Plaque de matériau à base de bois selon la revendication 4, **caractérisée en ce que** le cuir reconstitué présente une épaisseur comprise entre 0,4 et 5,5 mm, de préférence entre 0,5 et 3 mm, de manière particulièrement préférée entre 1 et 2 mm.

6. Plaque de matériau à base de bois selon l'une quelconque des revendications précédentes, **caractérisée en ce que** la ou les couches d'usure (4) sont une couche d'usure durcissable par rayonnements, notamment une couche de protection durcissable par UV et/ou durcissable par faisceau d'électrons (ESH).

7. Plaque de matériau à base de bois selon l'une quelconque des revendications précédentes, **caractérisée en ce que** plus d'une couche d'usure (4), de préférence deux ou trois couches d'usure, sont agencées les unes sur les autres.

8. Plaque de matériau à base de bois selon l'une quelconque des revendications précédentes, **caractérisée en ce qu'**au moins une structure 3D est prévue dans et/ou sur la ou les couches d'usure (4).

9. Plaque de matériau à base de bois selon l'une quelconque des revendications précédentes, **caractérisée en ce que** la surface de la ou des couches de particules de cuir (3) est prétraitée avant l'impression, notamment par traitement corona ou traitement plasma.

10. Plaque de matériau à base de bois selon l'une quelconque des revendications précédentes, **caractérisée en ce qu'**au moins une couche d'amorce, notamment une couche d'amorce contenant des groupes isocyanate, est appliquée sur la surface de la ou des couches de particules de cuir (3) avant l'impression.

11. Utilisation d'une plaque de matériau à base de bois selon l'une quelconque des revendications précédentes en tant qu'élément de revêtement de sol, élément de meuble et/ou élément de mur.

12. Procédé de fabrication d'une plaque de matériau à base de bois selon l'une quelconque des revendications 1 à 10, comprenant les étapes suivantes :
a) la fabrication d'au moins une plaque support (2a, 2b), notamment à partir de particules de bois ou d'un mélange de particules de bois et de particules de cuir,
b) l'application d'au moins une couche comprenant des particules de cuir (3) sur la ou les plaques supports (2a, 2b),
c) l'impression d'au moins une couche décorative (5) sur la ou les couches comprenant des particules de cuir (3),
d) l'application d'au moins une couche d'usure (4) sur la ou les couches décoratives imprimées (5) et
e) le durcissement des couches (3, 4, 5) appliquées avec la plaque support (2a, 2b).

13. Procédé selon la revendication 12, **caractérisé en ce qu'**avant l'impression de la ou des couches décoratives (5) sur la ou les couches de particules de cuir (3), la surface de la ou des couches de particules de cuir (3) est prétraitée, notamment par traitement corona, traitement plasma et/ou application d'au moins une couche d'amorce.

14. Procédé selon la revendication 12 ou 13, **caractérisé en ce que** la ou les couches décoratives (5) sont imprimées sur la couche de particules de cuir (3) en utilisant un procédé d'impression en creux et d'impression numérique ou une combinaison de ceux-ci.
